# EUROPÄISCHE PATENTSCHRIFT

(11) **EP 4 080 105 B1**
(45) Veröffentlichungstag und Bekanntmachung des Hinweises auf die Patenterteilung: **01.01.2025**
(21) Anmeldenummer: 22167749.5
(22) Anmeldetag: 12.04.2022
(51) Int. Cl.: F17C 3/10, F17C 9/04, F17C 13/02

(54) **VERFAHREN ZUM SPEICHERN UND ZUR ANWENDUNG VON FLÜSSIGWASSERSTOFF**
METHOD FOR STORING AND USING LIQUID HYDROGEN
PROCÉDÉ D'ACCUMULATION ET D'APPLICATION DE L'HYDROGÈNE LIQUIDE

(30) Priorität: 21.04.2021 DE 102021110168
(43) Veröffentlichungstag der Anmeldung: 26.10.2022
(73) Patentinhaber: Leibniz-Institut für Festkörper- und Werkstoffforschung Dresden e.V., 01069 Dresden (DE); Hochschule für Technik und Wirtschaft Dresden (FH) Prorektor F/E, Forschungskoordinierungsstelle, 01069 Dresden (DE)
(72) Erfinder: Lindackers, Dirk, 01445 Radebeul (DE); Schmidt, Hagen, 04105 Leipzig (DE); Morgenstern, Jens, 01217 Dresden (DE); Haberstroh, Christoph, 01099 Dresden (DE)
(74) Vertreter: Rauschenbach, Marion

(56) Entgegenhaltungen:
- WO-A1-2020/070683
- DE-A1- 102008 060 127
- DE-A1- 102011 081 673
- DE-A1- 102013 018 333
- JP-A- 2015 158 225
- US-A- 4 995 234
- US-A1- 2008 104 969

## Beschreibung

Die Erfindung bezieht sich auf das Gebiet der Wasserstofftechnik und betrifft ein Verfahren zur Speicherung und Anwendung von Flüssigwasserstoff, wie es beispielsweise für den Transport und die Speicherung von Flüssigwasserstoff in Tanks und die Verteilung an kleinere Speichereinheiten, LKW-Transporttanks und an Verbraucher zur Anwendung kommen kann.

Flüssigwasserstoff ist der flüssige Zustand des Elementes Wasserstoff. Wasserstoff liegt natürlich in molekularer H₂-Form vor. Um als Flüssigkeit zu existieren, muss H₂ unter seinen kritischen Punkt von 33 K abgekühlt werden (Wikipedia, Stichwort Flüssigwasserstoff).

Die Wasserstoffspeicherung ist die umkehrbare Aufbewahrung von Wasserstoff, mit dem Ziel, dessen chemischen und physikalischen Eigenschaften für eine weitere Verwendung zu erhalten. Die Speicherung umfasst die Vorgänge der Einspeicherung oder Speicherbeladung, der zeitlich befristeten Lagerung und der Ausspeicherung oder Speicherentladung. Konventionelle Methoden der Speicherung von Wasserstoff sind die Druckgasspeicherung in Druckbehältern durch Verdichten mit Kompressoren und die Flüssiggasspeicherung in verflüssigter Form durch Kühlung und Verdichten.

Wegen seiner chemischen und physikalischen Eigenschaften unterscheidet sich der Umgang mit Wasserstoff von anderen Energieträgern.

Wasserstoff bildet beim Austreten aus einem Speicher bereits bei einem Anteil von 4 % ein entzündliches Gemisch mit der Umgebungsluft und ab einem Anteil von 18 % ein explosives Gemisch (Knallgas).

Wasserstoff hat im Vergleich zu vielen Kohlenwasserstoffen eine niedrige Verbrennungsenthalpie und damit eine niedrige volumenbezogene Energiedichte (ca. 1/3 von Erdgas). Das erfordert zum Speichern äquivalenter Energiemengen im Vergleich zu Erdgas einen dreimal so großen Tank oder einen dreimal so hohen Druck. Auf Grund der geringen molaren Masse ergibt sich jedoch eine vergleichsweise hohe massenbezogene Energiedichte (z. B. mehr als die doppelte massenbezogene Energiedichte von Erdgas).

Durch seine geringe Molekülgröße diffundiert Wasserstoff relativ gut durch eine Vielzahl von Materialien, sodass viele Materialien für die Tankhülle ungeeignet sind. Durch hohe Temperaturen und hohen Innendruck wird der Diffusionsprozess verstärkt. Durch Wasserstoffversprödung werden metallische Tankhüllen zusätzlich belastet. Bei Hüllen aus Kunststoff tritt dieser Effekt nicht auf.

Bei der kryogenen Wasserstoffverflüssigung kommt es durch unvermeidbare thermische Isolationsverluste zum Verdampfen/Ausgasen. Damit der Druck in den Behältern nicht zu hoch steigt, wird das Wasserstoffgas mittels eines Überdruckventils abgelassen. Kann dieses entstehende Wasserstoffgas nicht genutzt werden, entstehen erhebliche Verluste.

Nicht nur zur Herstellung von Wasserstoff, sondern auch zur Speicherung werden große Energiemengen benötigt (Kompression ca. 12 %, Verflüssigung ca. 20 % der gespeicherten Energie). Daher ist die Wasserstoffspeicherung trotz vieler Vorteile derzeit oftmals unwirtschaftlich.

Für große Mengen werden Flüssiggasspeicher eingesetzt. Weil oberhalb des kritischen Punktes (33 K, 1,3 MPa = 13,0 bar) keine Druckverflüssigung mehr möglich ist, wird der Wasserstoff zur Verflüssigung stark gekühlt und verdichtet (LH2).

Der Energieaufwand dazu lässt sich in folgende Anteile gliedern, jeweils bezogen auf den gespeicherten Energieinhalt:
- 28 bis 46 % für die Verflüssigung je nach Menge und angewandter Methode,
- 6 % für den Transport zwischen Verflüssigungsstation und Tankstelle,
- bis zu 3 % je Tag (%/d) durch boil-off Verluste, und
- Verdampfungsverluste beim Umfüllen.

Der Druck stellt dann für die Gestaltung des Tanks kein Problem mehr dar. Ein großer Aufwand muss aber bei der Wärmedämmung des Tanks und der Leitungen betrieben werden. Vorteilhaft ist die geringere Reaktivität bei tiefen Temperaturen und die um den Faktor 800 höhere Dichte des flüssigen Wasserstoffs im Vergleich zu gasförmigem Wasserstoff bei Umgebungsdruck. Trotzdem benötigt flüssiger Wasserstoff je Gewichtseinheit viel Platz. Er hat mit 71 kg/m³ eine nur minimal höhere Dichte als kleinporig geschäumtes Polystyrol (in einen 20-Liter-Eimer passen nur 1,42 kg Flüssigwasserstoff, das entspricht etwa einem Zehntel dessen von Benzin). Nachteilig ist, dass durch die sehr niedrige Temperatur im Inneren des Tanks auch bei guter Wärmedämmung ein Wärmestrom aus der Umgebung nicht zu vermeiden ist. Dieser führt zu einer teilweisen Verdampfung des Wasserstoffs. Um einen Druckaufbau zu vermeiden, muss dieser Wasserstoff, bei unstetiger oder Nicht-Abnahme des entstehenden Wasserstoffgases, abgelassen werden (sogenannte Boil-Off-Verluste). Durch weitere Maßnahmen (boil off management) lassen sich die Verluste durch Verdunstung minimieren, bei stationären Anwendungen z. B. durch Kopplung mit einem Blockheizkraftwerk (BHKW).

Für den Einsatz in Automobilen wurden Tankroboter entwickelt, die die Kopplung und das Betanken übernehmen. Der Energieaufwand zur Verflüssigung fällt nur einmalig an, späteres Umfüllen benötigt relativ wenig Energie, erzeugt aber zusätzliche Ausgasungsverluste. Auch der Transport von der Fabrik mit Tanklastzügen zu Tankstellen/Lagertanks kostet durch das große Volumen und die geringe Energiedichte bis 6 % der eingesetzten Energie - ein Vielfaches gegenüber der Verteilung von flüssigen Kraftstoffen (0,2 %).

Bei beengten Platzverhältnissen ermöglicht die Kombination der oben genannten Varianten wesentlich höhere Speicherdichten von bis zu 100 kg/m³. Dabei erfolgt die Speicherung wie bei der Druckgasspeicherung oberhalb der kritischen Temperatur und des kritischen Druckes bei bis zu 1000 bar. Damit entspricht der Speicherdruck der Druckgasspeicherung, die Speichertemperatur liegt jedoch mit -220 °C (53 K) über der von Flüssigwasserstoff. Dem Vorteil der hohen Speicherdichte steht der notwendige Aufwand für den Drucktank und die thermische Dämmung gegenüber (Wikipedia, Stichwort Wasserstoffspeicherung).

Da Wasserstoff in flüssiger Form (LH2) die höchste Speicherdichte bietet, spielt dieser Zustand des Wasserstoffs trotz seiner Nachteile als alternativer Treibstoff eine zunehmend größere Rolle (H. Eichsleder, M. Klell: Wasserstoff in der Fahrzeugtechnik, 2008, ISBN 978-3-8348-0478-5).

Speichertanks für LH2 sind weltweit etabliert. Bekannt sind vorwiegend atmosphärische Tanks, in denen die Flüssigkeit tiefkalt bei 20,3 K vorliegt.

Trotz der sehr aufwändigen Isolierung weisen diese Tanks eine durchschnittliche Ruheverdampfung von 1-2 %/d auf. Der gasförmig anfallende Verlust an LH2 kann zumeist nur bedingt genutzt werden und geht dem Transort- und Lagerungsprozess verloren.

Bekannt sind auch überkritische Tanks. Diese sind gegenüber der Umgebung dicht und es wird für eine gewisse Zeit (z.B. die Transportdauer) ein Druck- und Temperaturaufbau im Innern zugelassen. Bei der Druckentlastung am Ende des Lagervorgangs, entsteht jedoch eine große Menge an Gas, die wiederum nicht als LH2 weiterverwendet werden kann.

Eine weitere Quelle für Abdampfverluste in LH2-Tanks ist die Füllstandsmessung. Die bekannten Verfahren beruhen auf elektrischen Widerstandsmessungen und tragen mit jedem Messvorgang Wärme in die tiefkalte Flüssigkeit.

Auch unter atmosphärischen Lagerbedingungen erzeugt jeder Umfüllvorgang einen Druckabfall zwischen Lager- und Zielbehälter und damit weitere Abdampfverluste in der Größenordnung von 10-20 %.

Auch hier kann das abdampfende H2-Gas nur zum Teil genutzt werden und geht der LH2-Logistikkette verloren.

Schließlich wird das LH2 vor seiner energetischen Nutzung in den gasförmigen Zustand versetzt. Dies geschieht zumeist durch die gezielte Zufuhr von Umgebungswärme. Bei diesem Vorgang wird der bei der LH2-Produktion anfallende erhebliche Energieaufwand vernichtet. Bei diesem Vorgang gehen ca. 30% der Wasserstoff enthaltenen Energie verloren.

Weiter ist nach der DE 10 2008 060 127 A1 eine Anlage zum Betanken von Kraftfahrzeugen mit komprimierten gasförmigem Wasserstoff oder mit kryogenem Wasserstoff bekannt, bei dem ein Kältespeicher durch Wärmetausch mit tiefkaltem Wasserstoff, welcher dem Vorratsbehälter mit kryogenem Wasserstoff entnommen und an den Anlagenteil mit komprimiertem gasförmigem Wasserstoff zugeführt wird, beladen wird.

Nachteilig bei den Lösungen des Standes der Technik ist, dass hohe Abdampfverluste bei der Speicherung und Verdampfungsverluste bei der Verteilung und Nutzung des LH2 auftreten.

Aufgabe der vorliegenden Erfindung ist es daher, ein Verfahren zum Speichern und zur Anwendung von Flüssigwasserstoff anzugeben, bei dem Abdampfverluste bei der Speicherung und Verdampfungsverluste bei der Verteilung und Nutzung von LH2 möglichst weitgehend vermieden werden.

Die Aufgabe wird durch die in den Ansprüchen angegebene Erfindung gelöst. Vorteilhafte Ausgestaltungen sind Gegenstand der Unteransprüche, wobei die Erfindung auch Kombinationen der einzelnen abhängigen Ansprüche im Sinne einer und-Verknüpfung einschließt, solange sie sich nicht gegenseitig ausschließen.

Bei dem erfindungsgemäßen Verfahren zum Speichern und zur Anwendung von Flüssigwasserstoff wird Flüssigwasserstoff in einen Primärspeicher eingespeichert, gelagert und ausgespeichert, wobei in den Primärspeicher mindestens eine Rückverflüssigungseinheit unter Einsatz von Materialien und Bauelementen unter Ausnutzung des magnetokalorischen Effektes und mindestens ein kontaktloser Füllstandsmesser unter Einsatz von akustoelektronischen Bauelementen eingebaut werden, und zur Einspeicherung und Ausspeicherung von Flüssigwasserstoff mindestens eine kryogene Pumpe eingesetzt wird, und die bei der Ausspeicherung und/oder Anwendung von Flüssigwasserstoff benötigte Verdampfungsenergie zur Überführung des Flüssigwasserstoffs in seine Gasform einem, in einem sekundären Kältekreis befindlichen, Kältemittel entzogen wird, welches kondensiert und mit einer Pumpe unter Druck gesetzt wird und in einem Sekundärspeicher gespeichert wird, wobei der Sekundärspeicher örtlich getrennt vom Primärspeicher angeordnet sein kann.

Vorteilhafterweise wird als Primärspeicher ein Tank für Flüssigwasserstoff eingesetzt, der durch Isolierung und/oder Druck und/oder Temperatur die Flüssigphase des Wasserstoffes im Tank aufrechterhält.

Weiterhin wird die Rückverflüssigungseinheit unter Einsatz von Materialien und Bauelementen unter Ausnutzung des magnetokalorischen Effektes verwendet, wobei vorteilhafterweise zur Realisierung des dazu notwendigen Magnetfeldes supraleitenden Materialien eingesetzt werden.

Und auch wird als Einbauten in den Primärspeicher mindestens ein kontaktloser Füllstandsmesser eingesetzt, der vorteilhafterweise seine Messwerte mittels kapazitiver induktiver und/oder Übertragung per Funk aus dem Inneren des Primärspeichers übermittelt.

Vorteilhaft ist es auch, wenn zur Einspeicherung und Ausspeicherung von Flüssigwasserstoff mindestens eine kryogene Pumpe eingesetzt wird, die Flüssigwasserstoff einspeichert und /oder zum Transport in Behälter oder zur Anwendung ausspeichert.

Weiterhin vorteilhaft ist es, wenn die Anwendung von Flüssigwasserstoff aus dem Primärspeicher in Speichern für Brennstoffzellen durchgeführt wird.

Ebenfalls vorteilhaft ist es, wenn die bei der Ausspeicherung und/oder Überführung von Flüssigwasserstoff in seine Gasform benötigte Verdampfungsenergie über einen Wärmeübertrager von einem Kältemittel aufgebracht wird, welches in einem Sekundärspeicher gespeichert werden kann, wobei noch vorteilhafterweise das Kältemittel aus einem Sekundärspeicher für die Anwendung in einer Klimaanlage oder in einer Kühlanlage eingesetzt wird.

Und auch vorteilhaft ist es, wenn der bei der Ausspeicherung und/oder Überführung von Flüssigwasserstoff in seine Gasform entstehende gasförmige Wasserstoff gespeichert und/oder an Verbraucher weitergeleitet wird.

Mit der erfindungsgemäßen Lösung wird es erstmals möglich, ein Verfahren zum Speichern und zur Anwendung von Flüssigwasserstoff anzugeben, bei dem Abdampfverluste bei der Speicherung und Verdampfungsverluste bei der Verteilung und Nutzung von LH2 möglichst weitgehend vermieden werden.

Erreicht wird dies mit einem Verfahren, bei dem Flüssigwasserstoff in einen Primärspeicher eingespeichert, gelagert und ausgespeichert wird.

Als Primärspeicher wird vorteilhafterweise ein Tank für Flüssigwasserstoff eingesetzt, der gemäß dem Stand der Technik bezüglich Abmessungen, Materialien und Isolierleistungen aufgebaut sein kann, wobei erfindungsgemäß realisiert sein muss, dass der Primärspeicher durch Isolierung und/oder Druck und/oder Temperatur die Flüssigphase des Wasserstoffs im Tank aufrechterhält. Vorteilhafterweise kann der Tank von einem Flüssigstickstoffschild umgeben sein, wodurch um den Tank eine Temperatur von 77 K realisiert wird. Damit kann erreicht werden, dass die Kühlung des Flüssigwasserstoffs keinen derartigen kühltechnischen und/oder isolatorischen Aufwand erfordert, wie gegenüber Umgebungstemperatur.

Erfindungsgemäß einsetzbare Primärspeicher, sogenannte Kryotanks, speichern bekanntermaßen flüssige, tiefkalte Gase und sind meist vakuumisoliert oder weisen andere, sehr hohe Isolationseigenschaften auf.

Derartige Kryotanks können Volumina von beispielsweise 2 bis 3500 m³ aufweisen und stationär oder fahrbar sein.

Neben bekannten Einbauten werden in die erfindungsgemäßen Primärspeicher mindestens eine Rückverflüssigungseinheit und mindestens ein Füllstandsmesser eingebaut.

Dabei wird als Einbauten in dem Primärspeicher mindestens eine Rückverflüssigungseinheit unter Einsatz von Materialien und Bauelementen eingesetzt, die den magnetokalorischen Effekt ausnutzen. Dabei werden erfindungsgemäß magnetische oder magnetisierbare Materialien eingesetzt, die eine Temperaturabsenkung aufweisen, wenn ein abnehmendes Magnetfeld einwirkt. Zur Realisierung des gewünschten Magnetfeldes können vorteilhafterweise supraleitenden Materialien eingesetzt werden.

Die Nutzung von Materialien unter Ausnutzung des Magnetokalorischen Effekts zu Kühlzwecken in der Nähe der Raumtemperatur ist allgemein bekannt. Die Effizienz dieses Verfahrens skaliert aber mit dem Verhältnis zwischen der unteren und oberen Temperatur, sowie mit der Größe der Magnetfeldänderung.

Die vorliegende Erfindung nutzt deshalb für die Rückverflüssigungseinheit das permanente hohe Magnetfeld supraleitender Materialien, beispielsweise supraleitende Spulen, und arbeitet dann damit nur gegen eine obere Temperatur von 77 K eines Flüssigstickstoffschildes. Damit kann für die Rückverflüssigung eine Effizienz von ca. 30 % statt der für Gaskältemaschinen üblichen 1-2 % erreicht werden.

Hinzu kommt, dass beim Einsatz von supraleitenden Materialien deren Kühlung unter die Sprungtemperatur vom LH2 selbst übernommen wird und somit keinen weiteren Aufwand darstellt. Dadurch kann die Effektivität des erfindungsgemäßen Verfahrens weiter gesteigert werden.

Ebenso wird als Einbauten in den Primärspeicher mindestens ein kontaktloser Füllstandsmesser unter Nutzung von akustoelektronischen Bauelementen eingesetzt.

Von besonderem Vorteil ist, dass der mindestens eine eingesetzte Füllstandsmesser seine Messwerte mittels kapazitiver, induktiver und/oder Übertragung per Funk, aus dem Inneren des Primärspeichers übermittelt und diese dort kontaktlos abfragbar sind. Dadurch kann auf ein Kabel aus dem Primärspeicher verzichtet werden, das den kalten Bereich des Vorratsbehälters zwangsweise mit der warmen Umgebung verbindet, so dass ein entsprechender Wärmeeintrag entfällt.

Vorteilhaft ist es auch, wenn alle anderen bekannten und erfindungsgemäßen zusätzlichen Einbauten in den Primär- aber auch den Sekundärspeicher kontaktlos Daten übermitteln oder aufnehmen, so dass Wärmebrücken aus dem Primär- oder Sekundärspeicher möglichst vermieden werden.

Die Füllstandsmessung im Primärspeicher erfolgt während des erfindungsgemäßen Verfahrens mittels akustoelektronischer Bauelemente, die mit Hilfe von akustischen Oberflächenwellen (SAW) die Phasengrenze zwischen Flüssig- und Gasphase empfindlich detektieren. Im Gegensatz zu den etablierten Widerstandsmessmethoden erzeugt die Messung selbst keinen Wärmeeintrag in den Flüssigwasserstoff.

Weiterhin wird erfindungsgemäß zur Einspeicherung und Ausspeicherung von Flüssigwasserstoff mindestens eine kryogene Pumpe eingesetzt, die Flüssigwasserstoff einspeichert und/oder zum Transport in Behälter oder zur Anwendung ausspeichert.

Durch den erfindungsgemäßen Einsatz einer kryogenen Pumpe werden die durch die Druckbeaufschlagung der Gasphase entstehenden Umfüllverluste des Flüssigwasserstoffs aus dem Primärspeicher vermieden.

Der besondere Vorteil der erfindungsgemäßen Lösung besteht darin, dass der Umfüllvorgang des Flüssigwasserstoff aus dem Primärbehälter in einen anderen Behälter oder in den Sekundärbehälter unter atmosphärischen Lagerbedingungen und unter gleichzeitiger Rückführung von kaltem Wasserstoffgas in den Primärspeicher realisiert wird. Auf diese Weise kann das Abdampfen von Flüssigwasserstoff aufgrund von Druckverlusten vermieden werden.

Im Gegensatz zu bekannten kryogenen Flüssigwasserstoffpumpen, die nur für den kurzfristigen Einsatz, für sehr hohe Förderraten und für sehr hohe Drücke ausgelegt sind, ist die erfindungsgemäß eingesetzte kryogene Pumpe fester Bestandteil des Primärspeichers und/oder Sekundärspeichers und/oder kann in der logistischen Kette zwischen den Speichern angeordnet sein.

Der im Primärspeicher vorhandene Flüssigwasserstoff kann direkt aus dem Primärspeicher entnommen und als Flüssigwasserstoff beispielsweise in einen weiteren Speicher oder Tank überführt und beispielsweise zur Betreibung einer Brennstoffzelle eingesetzt und verbraucht werden.

Weiterhin kann der Flüssigwasserstoff in seinen gasförmigen Zustand überführt und dann beispielsweise als Treibstoff verbraucht werden.

Die Überführung des Flüssigwasserstoffs in seinen gasförmigen Zustand kann nach dem Stand der Technik durchgeführt werden.

Jedoch wird erfindungsgemäß der Flüssigwasserstoff für eine Anwendung in seinen gasförmigen Zustand überführt, indem die benötigte Verdampfungsenergie einem, in einem sekundären Kältekreis befindlichen, Kältemittel entzogen wird. Das Kältemittel kondensiert, wird mit einer Pumpe unter Druck gesetzt und in einem Sekundärspeicher gespeichert, wobei der Sekundärspeicher örtlich getrennt vom Primärspeicher angeordnet sein kann.

Dies kann beispielsweise so realisiert werden, dass die Überführung des Flüssigwasserstoffs in seinen gasförmigen Zustand in einem Wärmeübertrager durchgeführt wird, der auf der anderen Seite ein Kältemittel aufweist, dem die Wärme zur Kondensation und/oder zur weiteren Abkühlung entzogen wird, wodurch die Kälte des Flüssigwasserstoffes aufgenommen worden ist und in einen Sekundärspeicher überführt oder direkt eingesetzt wird.

Dabei kann der Sekundärspeicher ein Speicher für ein Kältemittel, wie CO₂, sein, welches dann vorteilhafterweise in einer Klimaanlage oder in einer Kühlanlage eingesetzt werden kann.

Von Bedeutung ist, dass das Kältemittel des Sekundärkreislaufes bei Aufnahme der Verdampfungsenergie des Flüssigwasserstoffs in jedem Fall gasförmig oder flüssig wird und auch gasförmig oder flüssig bleibt. Dabei wird beispielsweise einem gasförmigen Kältemittel in einem Wärmeübertrager durch Abgabe der Verdampfungsenergie an den Flüssigwasserstoff Wärmeenergie entzogen und damit das Kältemittel abgekühlt und dadurch wird das gasförmige Kältemittel in seinen flüssigen Zustand überführt. Wenn in Abhängigkeit des Druckes die Temperatur des Kältemittels für diesen Übergang vom gasförmigen in den flüssigen Zustand möglichst hoch ist gegenüber der Temperatur des Flüssigwasserstoffs, kann eine hohe Energie im Sekundärkreislauf gespeichert werden.

Erfindungsgemäß ist von besonderer Bedeutung, dass die Rückgewinnung der initial aufgewandten Verflüssigungsenergie durch die Nachnutzung der Kälte in Form von Kondensationsenergie des Kältemittels über Sekundärspeicher erfolgt, die örtlich getrennt angeordnet sein können.

Statt den Flüssigwasserstoff für die energetische Nutzung durch die Erwärmung mit Umgebungswärme zu verdampfen, wird die dem Flüssigwasserstoff innewohnende Kälte erfindungsgemäß in einen Sekundärspeicher und/oder einen Sekundärkältekreis eingespeichert.

Damit ist ein Kältemittel in dem Sekundärspeicher vorhanden, welches zeitlich und räumlich unabhängig von der Verdampfung des Flüssigwasserstoffs für den Kälteverbrauch zur Verfügung steht.

Damit können die beiden Prozesse der Flüssigwasserstoff-Verdampfung und der Ausnutzung der innewohnenden Kälte für Kühlanwendungen sowohl zeitlich als auch räumlich voneinander entkoppelt werden. Die energetische Rückgewinnung der Verflüssigungsenergie ist insbesondere in der Einsparung von elektrischer Energie für diverse, alltägliche Kühlanwendungen zu sehen.

Die vorliegende Erfindung trägt wesentlich zur Effizienzsteigerung in der Logistik von Flüssigwasserstoff bei, da hohe Abdampfverluste und hohe Verdampfungsverluste weitgehend vermieden werden können und gleichzeitig Einsparungen an Energie durch Rückgewinnung von initial aufgewandter Verflüssigungsenergie erreicht werden können.

Die erfindungsgemäß erreichbare höchste energetische Speicherdichte prädestiniert das erfindungsgemäße Verfahren für die Speicherung und Verwendung in Tanksystemen für Transport, stationäre Speicherung und onboard-Nutzung. Durch das erfindungsgemäße Verfahren kann Flüssigwasserstoff in hoher Reinheit gespeichert und unmittelbar einer energetischen oder anderweitigen Nutzung zugeführt werden.

Nachfolgend wird die Erfindung an einem Ausführungsbeispiel näher erläutert.

Dabei zeigt
- Fig. 1: ein Ablaufschema für das erfindungsgemäße Verfahren mit Verbrauchern,
und
- Fig. 2: ein Ablaufschema für das erfindungsgemäße Verfahren mit Sekundärspeicher

### Beispiel 1

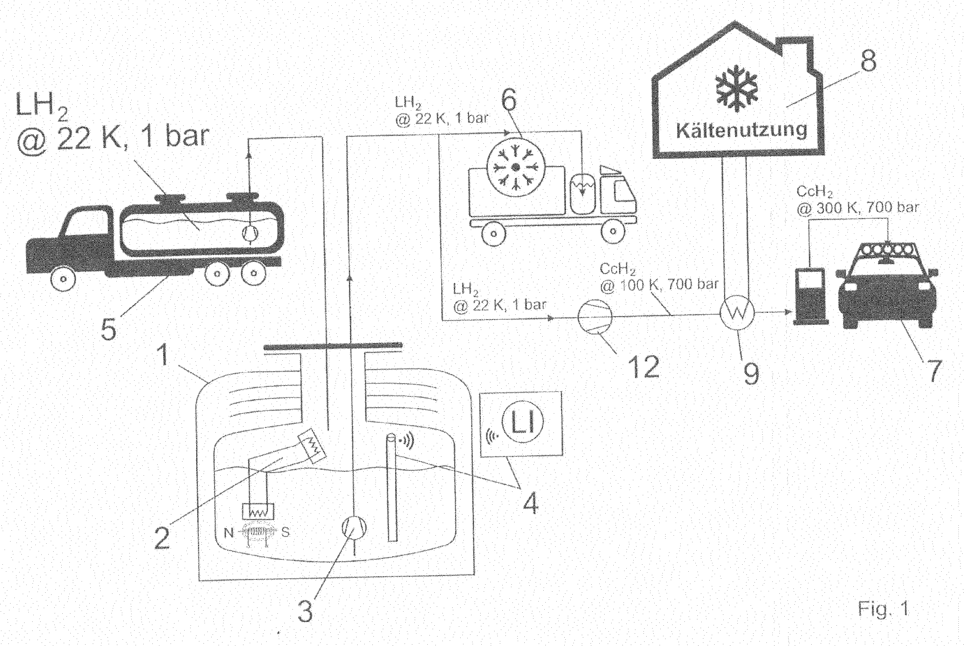

Gemäß Fig. 1 ist ein Primärspeicher 1 in Form eines stationären Tanks mit 5 m³ Speichervolumen vakuumisoliert und mit einem Flüssigstickstoffschild umgeben. Im Primärspeicher 1 sind 3 m³ Flüssigwasserstoff enthalten sowie eine Rückverflüssigungseinheit 2 aus Gadolinium als magnetokalorisches Material und zwei supraleitenden Spulen, wobei ein Teil der Rückverflüssigungseinheit 2 oberhalb und ein Teil unterhalb des Flüssigkeitsspiegels des Flüssigwasserstoffs angeordnet ist.

Weiterhin ist ein Füllstandsmesser 4 aus akustoelektronischen SAW-Bauelementen im Primärtank 1 angeordnet, der den erwarteten Bereich des zu messenden Füllstandsspiegels umfasst.

Im Flüssigwasserstoff ist eine kryogene Pumpe 3 vorhanden, an die eine Pumpleitung für den Flüssigwasserstoff zur Ein- und Ausspeicherung angeschlossen ist, die nach außerhalb des Primärspeichers 1 führt.

Zur Einspeicherung wird Flüssigwasserstoff aus einem Tankwagen 5 in den Primärspeicher 1 eingefüllt und lagert dort, bis er für die Verwendung ausgespeichert wird.

Die Verwendung des Flüssigwasserstoffs kann als Treibstoff für Fahrzeuge 6 realisiert werden.

Für die energetische Nutzung des Flüssigwasserstoffs wird dieser in einem Wärmeübertrager 9 in die Gasform überführt. Die Kälte des Flüssigwasserstoffs kann über ein anderes Kältemittel dann für die Kühlung eines Kühlhauses 8 verwendet werden. Der gasförmige Wasserstoff kann beispielsweise als Treibstoff 7 verwendet werden.

### Beispiel 2

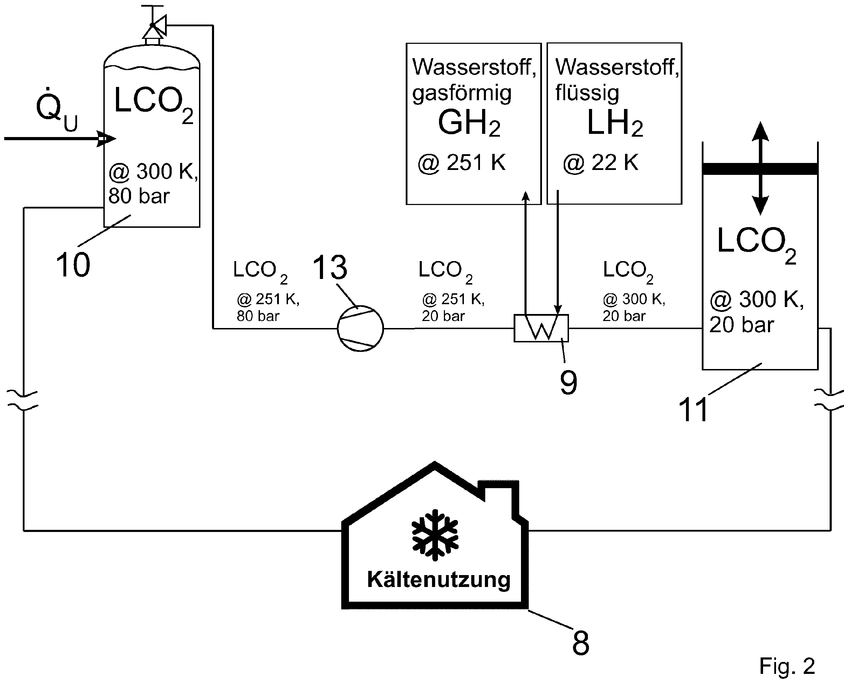

Für den Fall der Verwendung von gespeichertem Flüssigwasserstoff aus einem Primärspeicher 1 wird gemäß Fig. 2 beim Erwärmen des Flüssigwasserstoffes zur Überführung in die Gasform die vorhandene, dem Flüssigwasserstoff innewohnende Kälte über einen Wärmeübertrager 9 gewonnen und an ein Kältemittel in Form von CO₂ abgegeben, welches in flüssiger Form in einen Sekundärspeicher 10 und in gasförmiger Form in einen weiteren Sekundärspeicher 11 gespeichert wird, die Bestandteile eines Sekundär-Kältekreises sind.

Zur Druckerhöhung wird das CO₂ über eine Flüssigkeitspumpe 13 geführt und bei hohem Druck verflüssigt in den Sekundärspeicher 10 eingespeichert. Das ist möglich, weil die flüssige Phase durch das Kondensieren des CO₂ bei niedrigerem Druck aus seinem Kältemitteldampf erzeugt wird. Dabei nutzt ein Wärmeübertrager 9 die Kälte des zur Aufwärmung bestimmten Flüssigwasserstoffes zur Abkühlung von CO₂-Gas bis zur Kondensation.

Mit den Sekundärspeichern 10, 11 wird die Verwendung von Flüssigwasserstoff zeitlich und räumlich in einem Sekundär-Kältekreislauf entkoppelt. So ist die Kühlung durch einen Kälteverbraucher 8 in Form von Kühlgut nicht vom Wasserstoffbedarf für zum Beispiel eine Brennstoffzelle in einem LKW oder für eine stationäre Gasturbine abhängig und umgekehrt.

Die Energierückgewinnung wird durch die Nichtaufwendung von elektrischer Energie für die Erzeugung konventioneller Kälte realisiert. Die Verwendung von flüssigem CO₂ erlaubt zudem die Speicherung bei Raumtemperatur, weil die Kälte erst bei der Entspannung vom hohem zum niedrigeren Druck erzeugt wird.

### Bezugszeichenliste

- 1: Primärspeicher
- 2: Rückverflüssigungseinheit
- 3: kryogene Pumpe
- 4: Füllstandsmesser
- 5: Tankfahrzeug zur Einspeisung von Flüssigwasserstoff in den Primärspeicher
- 6: Verbraucher von Flüssigwasserstoff
- 7: Verbraucher von gasförmigem Wasserstoff
- 8: Kälteverbraucher
- 9: Wärmeübertrager
- 10: Sekundärspeicher Kältemittel flüssig
- 11: Sekundärspeicher Kältemittel gasförmig
- 12: Pumpe
- 13: Pumpe

## Patentansprüche

1. Verfahren zum Speichern und zur Anwendung von Flüssigwasserstoff, bei dem Flüssigwasserstoff in einen Primärspeicher (1) eingespeichert, gelagert und ausgespeichert wird, wobei in den Primärspeicher (1) mindestens eine Rückverflüssigungseinheit (2) unter Einsatz von Materialien und Bauelementen unter Ausnutzung des magnetokalorischen Effektes und mindestens ein kontaktloser Füllstandsmesser (4) unter Einsatz von akustoelektronischen Bauelementen eingebaut werden, und zur Einspeicherung und Ausspeicherung von Flüssigwasserstoff mindestens eine kryogene Pumpe (3) eingesetzt wird, und die bei der Ausspeicherung und/oder Anwendung von Flüssigwasserstoff benötigte Verdampfungsenergie zur Überführung des Flüssigwasserstoffs in seine Gasform einem, in einem sekundären Kältekreis befindlichen, Kältemittel entzogen wird, welches kondensiert und mit einer Pumpe (13) unter Druck gesetzt wird und in einem Sekundärspeicher (10) gespeichert wird, wobei der Sekundärspeicher (10) örtlich getrennt vom Primärspeicher (1) angeordnet sein kann.

2. Verfahren nach Anspruch 1, bei dem als Primärspeicher (1) ein Tank für Flüssigwasserstoff eingesetzt wird, der durch Isolierung und/oder Druck und/oder Temperatur die Flüssigphase des Wasserstoffes im Tank aufrechterhält.

3. Verfahren nach Anspruch 1, bei dem die Rückverflüssigungseinheit (2) unter Einsatz von Materialien und Bauelementen unter Ausnutzung des magnetokalorischen Effektes verwendet wird, wobei zur Realisierung des dazu notwendigen Magnetfeldes supraleitenden Materialien eingesetzt werden.

4. Verfahren nach Anspruch 1, bei dem als Einbauten in den Primärspeicher mindestens ein kontaktloser Füllstandsmesser (4) eingesetzt wird, der seine Messwerte mittels kapazitiver, induktiver und/oder Übertragung per Funk, aus dem Inneren des Primärspeichers (1) übermittelt.

5. Verfahren nach Anspruch 1, bei dem zur Einspeicherung und Ausspeicherung von Flüssigwasserstoff mindestens eine kryogene Pumpe (3) eingesetzt wird, die Flüssigwasserstoff einspeichert und/oder zum Transport in Behälter oder zur Anwendung ausspeichert.

6. Verfahren nach Anspruch 1, bei dem die Anwendung von Flüssigwasserstoff aus dem Primärspeicher (1) in Speichern (6, 7) für Brennstoffzellen durchgeführt wird.

7. Verfahren nach Anspruch 1, bei dem die bei der Ausspeicherung und/oder Überführung von Flüssigwasserstoff in seine Gasform benötigte Verdampfungsenergie über einen Wärmeübertrager von einem Kältemittel aufgebracht wird, welches in einem Sekundärspeicher (10) gespeichert werden kann.

8. Verfahren nach Anspruch 7, bei dem das Kältemittel aus einem Sekundärspeicher (10) für die Anwendung in einer Klimaanlage (8) oder in einer Kühlanlage (8) eingesetzt wird.

9. Verfahren nach Anspruch 1, bei dem der bei der Ausspeicherung und/oder Überführung von Flüssigwasserstoff in seine Gasform entstehende gasförmige Wasserstoff gespeichert und/oder an Verbraucher (7) weitergeleitet wird.

## Claims

1. Process for storage and for use of liquid hydrogen, wherein liquid hydrogen is introduced into, stored in and discharged from a primary storage means (1), wherein at least one reliquefaction unit (2) using materials and components utilizing the magnetocaloric effect and at least one contactless fill level measurement means (4) using acoustoelectronic components are installed in the primary storage means (1) and for introduction and discharging of liquid hydrogen at least one cryogenic pump (3) is employed and the evaporation energy required in the discharging and/or use of liquid hydrogen to convert the liquid hydrogen into its gaseous form is withdrawn from a refrigerant in a secondary refrigeration circuit which condenses and is pressurized with a pump (13) and stored in a secondary storage means (10), wherein the secondary storage means (10) may be arranged at a separate location from the primary storage means (1) .

2. Process according to Claim 1, wherein the primary storage means (1) employed is a tank for liquid hydrogen which maintains the liquid phase of the hydrogen in the tank through insulation and/or pressure and/or temperature.

3. Process according to Claim 1, wherein the reliquefaction unit (2) is employed using materials and components utilizing the magnetocaloric effect, wherein superconducting materials are used to realize the magnetic field necessary therefor.

4. Process according to Claim 1, wherein one or more contactless fill level measurement means (4) which transmit their measured values from the interior of the primary storage means (1) by means of capacitive, inductive and/or radial transmission are employed as internals in the primary storage means.

5. Process according to Claim 1, wherein introduction and discharging of liquid hydrogen employs at least one cryogenic pump (3) which effects introduction and/or discharging, for transport in containers or for use, of liquid hydrogen.

6. Process according to Claim 1, wherein the liquid hydrogen from the primary storage means (1) is used in storage means (6, 7) for fuel cells.

7. Process according to Claim 1, wherein the evaporation energy required in the discharging and/or conversion of liquid hydrogen into its gaseous form is provided via a heat exchanger by a refrigerant which may be stored in a secondary storage means (10).

8. Process according to Claim 7, wherein the refrigerant from a secondary storage means (10) is employed for use in an air conditioning system (8) or in a refrigeration system (8).

9. Process according to Claim 1, wherein the gaseous hydrogen formed during discharging and/or conversion of liquid hydrogen into its gaseous form is stored and/or sent to the consumer (7).

## Revendications

1. Procédé de stockage et d'utilisation d'hydrogène liquide, dans lequel de l'hydrogène liquide est introduit dans un réservoir primaire (1), stocké et déstocké, dans lequel sont installés une unité de reliquéfaction (2) dans le réservoir primaire (1) par utilisation de matériaux et d'éléments de construction faisant appel à l'effet magnétocalorique, et au moins une jauge de niveau (4) sans contact, faisant appel à des éléments de construction acousto-électroniques, et, pour le stockage et le déstockage de l'hydrogène liquide, au moins une pompe cryogénique (3) étant utilisée, et l'énergie de vaporisation nécessaire lors du déstockage et/ou de l'utilisation de l'hydrogène liquide étant, pour convertir l'hydrogène liquide en sa forme gazeuse, prélevée d'un fluide de refroidissement se trouvant dans un circuit de refroidissement secondaire, fluide de refroidissement qui est condensé et mis sous pression à l'aide d'une pompe (13) et étant stocké dans un réservoir secondaire (10), le réservoir secondaire (10) pouvant être disposé spatialement séparé du réservoir primaire (1).

2. Procédé selon la revendication 1, dans lequel on utilise comme réservoir primaire (1) une cuve pour l'hydrogène liquide, qui, à l'aide d'une isolation et/ou d'une pression et/ou de la température, maintient la phase liquide de l'hydrogène dans la cuve.

3. Procédé selon la revendication 1, dans lequel l'unité de reliquéfaction (2) est utilisée par emploi de matériaux et d'éléments de construction faisant appel à l'effet magnétocalorique, des matériaux supraconducteurs étant utilisés pour réaliser le champ magnétique nécessaire à cette fin.

4. Procédé selon la revendication 1, dans lequel on utilise comme éléments internes du réservoir primaire au moins une jauge de niveau (4) sans contact, qui transmet de l'intérieur du réservoir primaire (1) ses valeurs de mesure par transmission capacitive, inductive et/ou radio.

5. Procédé selon la revendication 1, dans lequel on utilise pour stocker et déstocker l'hydrogène liquide au moins une pompe cryogénique (3), qui stocke l'hydrogène liquide et/ou le déstocke pour transport vers un récipient ou pour utilisation.

6. Procédé selon la revendication 1, dans lequel l'utilisation d'hydrogène liquide provenant du réservoir primaire (1) est mise en œuvre dans des réservoirs (6, 7) pour piles à combustible.

7. Procédé selon la revendication 1, dans lequel l'énergie de vaporisation nécessaire au stockage et/ou au transfert de l'hydrogène liquide sous sa forme gazeuse est reprise, par l'intermédiaire d'un échangeur de chaleur, d'un fluide de refroidissement qui peut être stocké dans un réservoir secondaire (10).

8. Procédé selon la revendication 7, dans lequel le fluide de refroidissement provenant d'un réservoir secondaire (10) est utilisé pour application dans une installation de climatisation (8) ou dans une installation de refroidissement (8).

9. Procédé selon la revendication 1, dans lequel l'hydrogène gazeux qui se forme lors du déstockage et/ou de la conversion de l'hydrogène liquide en sa forme gazeuse est stocké et/ou transféré à un consommateur (7).
